# EUROPEAN PATENT APPLICATION

(11) **EP 4 375 630 A1**
(43) Date of publication of application: **29.05.2024**
(21) Application number: 22209449.2
(22) Date of filing: 24.11.2022
(51) Int. Cl.: G01J 5/34, G01J 5/35

(54) **PYROELECTRIC INFRARED DETECTOR DEVICE**

(71) Applicant: Photona GmbH, 82140 Olching (DE)
(72) Inventor: Baliga, Shankar, Chandler, 85225 (US); Kunsch, Johannes, 82140 Olching (DE); Köhler, Reinhard, 01189 Dresden (DE)
(74) Representative: von Hirschhausen, Helge

(57) **Abstract**

The present invention relates to a pyroelectric infrared detector device comprising:
- an arrangement of a plurality of pyroelectric elements electrically coupled in series each with a same polarization direction;
- a pre-amplification circuit for operating the arrangement of the plurality of pyroelectric elements to generate an output voltage.

## Description

The present invention relates to pyroelectric infrared detector devices, in particular pyroelectric infrared detector devices with improved sensitivity and an increased signal-to-noise ratio.

Pyroelectric infrared detector devices have found application in different technical fields applying infrared radiation measurement as well as spectroscopic applications. Particularly, such detector devices pose high requirements on the characteristics of the pyroelectric elements used therein when it comes to make accurate measurements at relatively high modulation frequencies, such as 1 kHz, and at higher infrared wavelengths beyond 5 µm.

The pyroelectric element of such a detector device includes a pyroelectric substrate made of a material which polarizes on the impact of radiation-induced temperature increase. The pyroelectric substrate is basically sandwiched by electrodes. Irradiating the pyroelectric element with infrared light increases the temperature of the substrate which results in a spontaneous polarization so that electric charges are generated on the surface of the substrate which can be tapped via the electrodes.

The generated electric charge gives an indication of the amount of infrared radiation change applied onto the substrate. Pyroelectric infrared detector devices are commonly known as broadband thermal detectors so that the electrical signal represents a wide range of wavelengths from near-infrared light frequency up to the Terahertz-region.

While pyroelectric detector devices usually have high performance at low modulation frequencies of below 100 Hz, they have a significantly reduced performance at higher modulation frequencies. However, there is an ongoing need for broadband infrared detector devices with improved high-frequency performances.

One common material for the pyroelectric substrate is LiTaO3 (lithium tantalate). Compared to other conventional materials, such as DLaTGS-based (Deuterated Lanthanum α Alanine doped TriGlycine Sulphate) pyroelectric infrared detector devices, lithium tantalate has a low pyroelectric coefficient which may be made up by a high Curie temperature and a low temperature dependency. However, the signal output of such an infrared detector device is substantially lower than with conventional DLaTGS-based detector devices.

From document EP 2 555 266 B1, a pyroelectric element is known wherein the pyroelectric substrate of lithium tantalate single crystal, the pair of electrodes is disposed on front and back sides of the substrate. The so formed lithium tantalate single crystal elements are serially coupled, however, with an inverse polarization direction at least partly eliminating the voltage signal output.

M. Schossig et al., "Dielectric and pyroelectric properties of ultrathin, monocrystalline lithium tantalate", Infrared Physics & Technology, Volume 63, 2014, Pages 35-41, ISSN 1350-4495 discloses properties of an ultrathin, single-crystal self-supporting lithium tantalate (LiTaO3) wafer in terms of pyroelectric coefficient, relative permittivity, and dielectric loss factor for their use in pyroelectric radiation detectors, particularly, in dependence on film thickness and temperature.

The document Y. Querner et al., "High-sensitive pyroelectric detectors with internal thermal amplification", Sensors and Actuators A 172, 2011, pages 169-174 discloses a measure for increasing the sensitivity of pyroelectric detectors by means of a three-dimensional pattern that is etched into the sensitive element. Lateral heat flux spreading is used to improve the responsivity. Here, the effect is used, that very thin regions between thicker regions show faster heating due to incident radiation and, hence, lead to an additional heat flow from these intermediate regions to the sensitive element.

It is an object of the present invention to provide an improved pyroelectric infrared detector device with an increased signal output and an increased signal-to-noise ratio.

To overcome the disadvantages of the prior art approaches, a pyroelectric infrared detector device according to claim 1 is provided. Further embodiments are indicated in the dependent subclaims.

According to a first aspect, a pyroelectric infrared detector device is provided, comprising:
- an arrangement of a plurality of pyroelectric elements integrated on a pyroelectric substrate and electrically coupled in series each with a same polarization direction;
- a pre-amplification circuit for operating the arrangement of the plurality of pyroelectric elements to generate an output voltage.

A pre-amplification circuit may be provided that is configured to operate the arrangement of the plurality of pyroelectric elements to generate an output voltage.

The pre-amplification circuit may be configured to operate the arrangement of the plurality of pyroelectric elements in voltage mode. Alternatively, the pre-amplification circuit may be configured to operate the arrangement of the plurality of pyroelectric elements in current mode.

Preferably, the plurality of the pyroelectric elements may share a single pyroelectric substrate, particularly comprising lithium tantalate.

Due to the use of lithium tantalate, the above pyroelectric infrared detector device has significant advantages compared to pyroelectric detector devices made of other known pyroelectric materials such as DLaTGS. So, by use of lithium tantalate as substrate material, a much higher Curie temperature can be achieved compared to other pyroelectric materials. Furthermore, lithium tantalate is not hygroscopic and provides a low-temperature dependency of the spontaneous polarization behaviour. In contrast thereto, pyroelectric elements based on DLaTGS have a high-temperature dependency and usually cannot be used above 50 °C for industrial applications.

Furthermore, lithium tantalate has further advantages when it comes to electrically processing of sensed signals, such as an improved linearity of temperature dependency. According to above pyroelectric infrared detection device, one disadvantage of a significantly reduced voltage signal of a pyroelectric element is overcome by serially coupling of a plurality of pyroelectric elements so that their combined output voltage can be boosted in a scalable manner. Moreover, the effective capacitance of the serially coupled pyroelectric elements is reduced. The higher dielectric constant of lithium tantalate is made up or compensated by serially coupling of three or more pyroelectric elements.

By serially in-phase coupling, the pyroelectric elements of the detector device provide a multiplied output voltage as the pyroelectric element voltage signals are added up in phase, and provide the multiple of the voltage signal of a single pyroelectric element. The voltage signals add linearly as the signals are in phase. The resulting output voltage noise only increases in terms of a square root due to the random nature of noise fluctuations.

For instance, using a number of four pyroelectric elements the generated combined output voltage corresponds to the sum of voltage signals of each of the pyroelectric elements, i.e. four times of the voltage signals of a single pyroelectric element, while the overall output voltage noise is only doubled. This leads to a signal-to-noise ratio improvement of a factor of 2.

The measure of serially coupling multiple pyroelectric elements brings the lithium tantalate detector device in line with DLaTGS detector devices for high-frequency operation such as at 1 kHz, however, with the significantly higher Curie temperature at 610 °C, the pyroelectric substrate does not depolarize under high infrared radiation impact so that the detector device does not need any measures for temperature stabilization.

Moreover, the use of lithium tantalate as a pyroelectric material provides an improved linearity which is important for high accuracy measurements of infrared radiation, particularly of spectroscopic applications.

It may be provided that the pyroelectric substrate has an active area where the pyroelectric substrate is thinned, wherein each pyroelectric element has a pair of opposing electrodes arranged on a front side and a back side of the active area.

Furthermore, it may be provided that the pyroelectric substrate has a thickness of between 10 -50 um and/or wherein the active area has a thickness of 1-10 um preferably between 1-6 um, more preferably between 1-2 um. As the generation of noise in the pyroelectric elements operated in voltage mode substantially is a function of the thickness of the pyroelectric substrate, a thinner substrate provides for lower noise. While standard detector devices use substrates with thicknesses in the range of 20 to 25 µm, reducing thickness as low as 1 to 10 µm, the overall noise of the multiple pyroelectric elements can be reduced below the noise of the transistor used for pre-amplification of the voltage output.

In case e.g. a JFET which has a noise limit of around 7 nV/Hz^{0.5} is used for voltage mode operation, the detector performance with an active area thickness of 2 µm is limited by the noise of the JFET and not by the noise of the pyroelectric elements.

According to an embodiment, at least one of the front side electrode and/or at least one of the back side electrode may be extended to an area of the pyroelectric substrate neighbouring the active area.

Furthermore, the electrodes of the pyroelectric elements may cover a circular area on the active area wherein each of the pyroelectric elements is shaped as an annular segment.

Also, the electrical coupling of the pyroelectric elements in series may comprise at least one bond wire connecting one of the at least one front side electrodes and contacting one of the at least one back side electrodes and which is fed around an edge of the pyroelectric substrate.

It may be provided that the pyroelectric substrate is attached to a carrier substrate, wherein electronic components of the pre-amplification circuit are attached on one main surface of the carrier substrate, particularly on a surface of the carrier substrate opposite to the surface on/above which the pyroelectric substrate is attached.

Embodiments are described in more detail in conjunction with the accompanying drawings in which:
- Figure 1: shows a perspective view on the pyroelectric infrared detector device according to an embodiment of the present invention;
- Figure 2: a cross-sectional view through the pyroelectric substrate;
- Figure 3: a schematic of the electronic circuit of the detector device of Figure 1 operating in voltage mode;

- Figure 4: a schematic of the electronic circuit of the detector device of Figure 1 operating in current mode; and
- Figure 5: a cross-sectional view through the carrier substrate with the pyroelectric substrate attached.

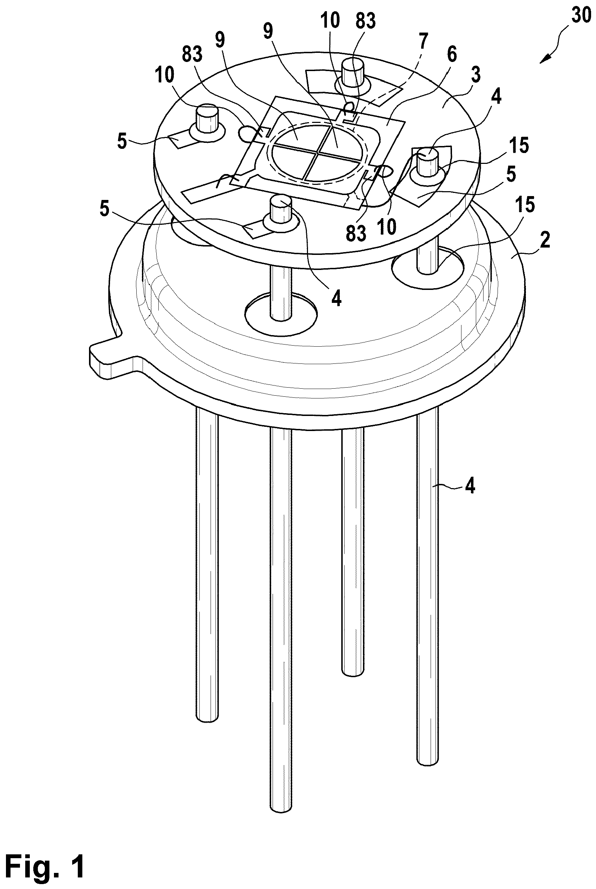

Figure 1 shows a perspective view on a pyroelectric infrared detector device 1 comprising a package 2 on which a non-conductive (e.g. ceramic) carrier substrate 3 is fixated. The carrier substrate 3 receives electrical contact wires 4 for external connection. The electrical contact wires 4 pass through through-holes 15 in package 2 and end at carrier substrate 3 where they are electrically coupled with bond pads 5 to provide an electrical interconnection with circuitry on carrier substrate 3. The electrical contact wires 4 are electrically insulated from device package 2. So, the electrical contact wires 4 form electrical terminal contacts for the external electrical connection of the detector device 1.

On the carrier substrate 3, a mono-crystalline pyroelectric substrate 6 may be attached. The pyroelectric substrate 6 has an active area 7 where the pyroelectric substrate 6 is thinned to form a membrane-like structure. The pyroelectric substrate 6 may be made of or may comprise lithium tantalate and has dimensions of 2x2mm and an overall thickness of about 20 to 50 µm.

As shown in the cross-sectional view through the pyroelectric substrate 6, the active area 7 may be centered in the pyroelectric substrate 6 and may be thinned down to a thickness of 1 to 10 µm, preferably to 2 µm. The active area 7 may have a circular or rectangular cross-section with a diameter of between 1 to 3 mm, preferably between 1.3 mm to 2 mm.

The active area 7 might be provided with a plurality of pairs of opposing electrodes 8 having a front side electrode 81 on one side of the active area 7 and a back side electrode 82 on the other side of the active area 7. The front and the back side electrodes 81, 82 of each pair are opposing each other forming a pyroelectric element 9 with the portion of the membrane of the active area 7 between the opposing electrodes 81, 82 that is sensitive to infrared radiation.

Each of the front and back side electrodes 81, 82 may have an extension 83 which form a contact pad. The so formed contact pads facilitate an electrical contacting of the respective electrode 81, 82 via a bond wire 10 which may be attached via bonding. The extensions 83 of the electrodes 81, 82 extend to a region of the pyroelectric substrate 6 beyond the active area 7 so that the process of bonding the contact pad formed by the extension with a bond wire 10 will not affect the mechanical stability of the active area 7.

Preferably, each of the pyroelectric elements 9 comprises electrodes 81, 82 which may have a shape of an annular segment such as a quadrant segment so that the front side electrodes 81 as well as the backside electrodes 82 are electrically insulated from each other, respectively, and galvanically separated by the thinned dielectric pyroelectric material of the active area 7 of the pyroelectric substrate 6.

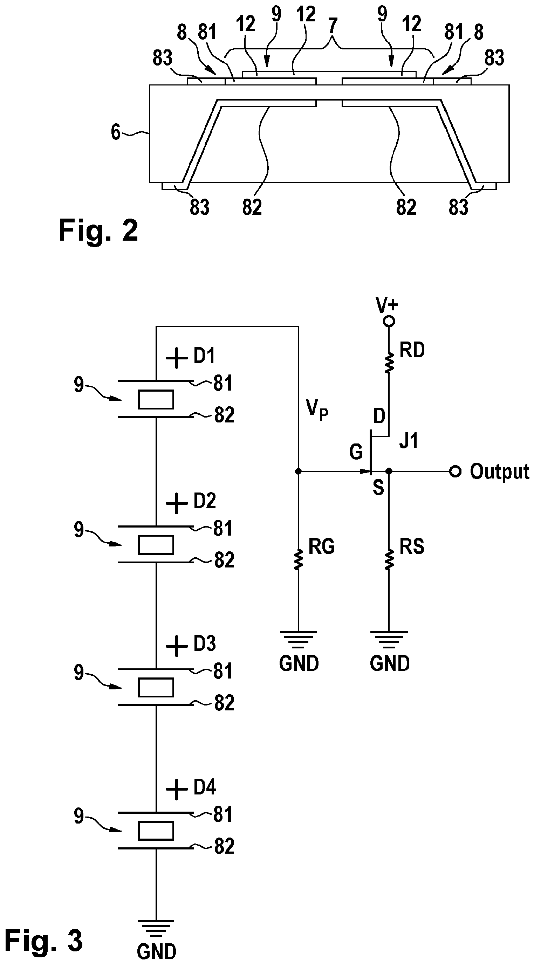

As shown in conjunction with the schematic of Figure 3, the pyroelectric elements 9 are electrically coupled in series so that a front side electrode 81 of one pair of electrodes 8 is electrically connected with a backside electrode 82 of another pair of electrodes 82. Therefore, bond wires 10 may be provided which contact a front side electrode 81 of one pair of electrodes via the respective contact pad (extension 83) and which are fed around the edge of the pyroelectric substrate 6 to the contact pad (extension 83) of the back side electrode 82 of another pair of electrodes 81, 82.

Figure 3 schematically shows an exemplary schematic of the circuitry of the infrared detector device 1 operating in voltage mode. It can be seen that the pyroelectric elements 9 are coupled in series in phase, i.e., with the same polarization direction of the mono-crystalline active area. The series connection of the pyroelectric elements 8 is coupled between a low supply potential, i.e. e.g. ground potential GND (or any other reference potential which serves as a low supply potential) and a gate terminal G of a transistor element which may be formed as a junction field effect transistor JFET J1.

Furthermore, the gate terminal G may be connected to ground potential GND via a first resistor RG having a very high resistivity to avoid accumulating charges at the gate terminal G of the JFET J1. A source terminal S of the JFET J1 is connected via a second resistor RS with the ground potential GND, and a drain terminal D of the JFET J1 is connected via a third resistor RD to a high supply potential V+. The source terminal S of the JFET J1 further provides the output of the detector device 1.

The preamplifier circuitry formed thereof operates the pyroelectric elements 9 in voltage mode so that a voltage signal proportional to the voltage VP at the gate terminal G is provided as output.

Typical values of the circuitry of the preamplification circuit may be: V+ = 9 V, RG= 10 GO, RS= 47 kΩ, and RD= 10 kΩ.

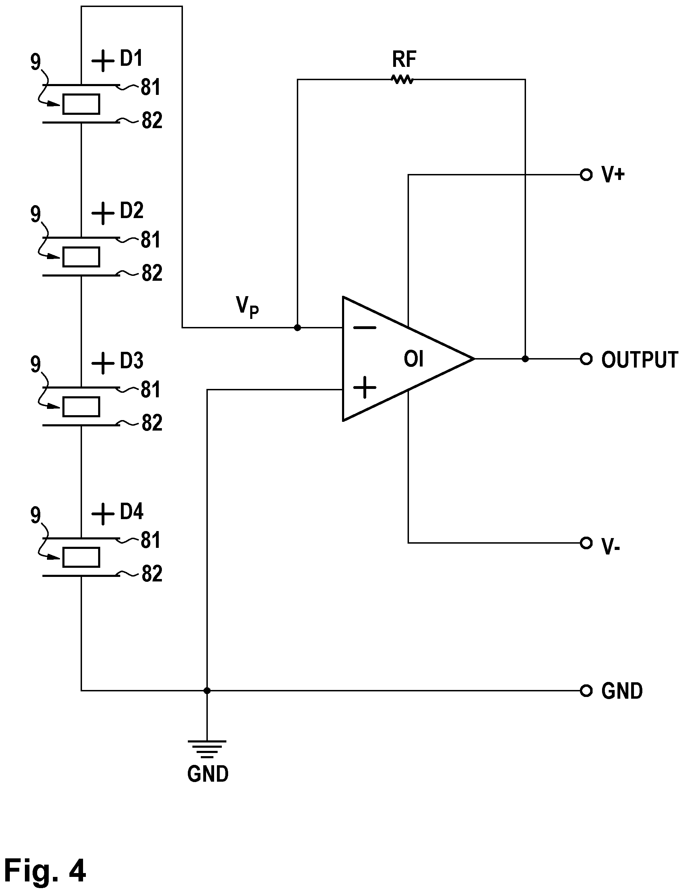

Figure 4 schematically shows an exemplary schematic of the circuitry of the infrared detector device 1 operating in current mode. As above, the pyroelectric elements 9 are coupled in series in phase. The serially connected the pyroelectric elements 9 are coupled between a ground potential GND and a , and a negative input terminal of a high input impedance operational amplifier O1. A positive input terminal of the operational amplifier O1 is connected with the ground potential. The operation amplifier is supplied via a high supply potential V+ and a low supply potential V- (preferably equal or lower than ground potential).

Furthermore, the negative input terminal of the operational amplifier O1 is connected via a feedback resistance RF with the output terminal of the operational amplifier O1. The output terminal of the operational amplifier O1 provides the output of the detector device 1.

The preamplifier circuitry formed thereof operates the pyroelectric elements 9 in current mode so that the output signal provides a voltage proportional to the current through the serially connected pyroelectric elements 9. In the current Mode the operational amplifier feedback resistor RF provides electronic gain and amplifies the signal V_{P} provided by the pyroelectric elements 9. The resistance RF may typically be between 10 GO and 100 GO.

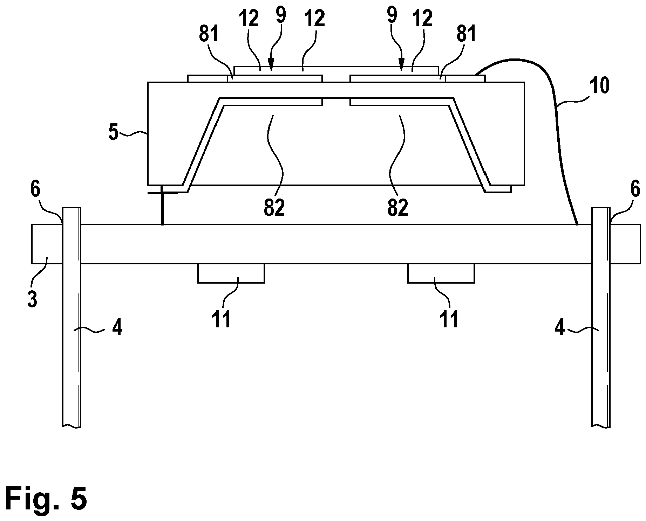

Figure 5 shows a cross-sectional view through the carrier substrate 3 carrying the pyroelectric substrate 6 comprising the pyroelectric elements 9 and the electronic components 11 of the preamplification circuit as shown in Figure 3. It can be seen that the electronic components 11 of the first RG, second resistor RS and third resistor RD, and the JFET J1 are arranged on the back side (surface of the carrier substrate opposite to the surface on which the pyroelectric substrate is attached) of the carrier substrate 3, while the pyroelectric substrate 6 is attached to the upper side of the carrier substrate 3.

The gate terminal voltage VP is caused by a temperature change in the pyroelectric material which results in a spontaneous polarization depending on the crystal plane of the pyroelectric material of the pyroelectric substrate. As the series connection of the pyroelectric elements is in phase, i.e., serially connected so that the electrical charges generated by polarization add up, the gate terminal voltage VP corresponds to the sum of each voltage signal so that the output voltage after pre-amplification is increased correspondingly. In the present embodiment, four pyroelectric elements 9 are provided, so that the output voltage is increased by a factor of 4.

Due to the random nature of noise fluctuations, the noise in the voltage signals of each pyroelectric element 9 does not add linearly, but in quadrature, so that the voltage noise is only doubled while the responsivity is quadrupled leading to an improved signal-to-noise ratio of a factor of 2.

Furthermore, by using lithium tantalate as a pyroelectric material, the Curie temperature of 610 °C makes the detector device 1 suitable even for high-temperature applications where the operating temperature is only limited by the restrictions given by the transistor element.

On top of the front side electrodes 81, a non-conducting infrared absorbing layer 12 may be provided e.g., by a coating which is usually black-colored to provide best absorption and transformation of infrared radiation to heat energy.

In other embodiments, the front electrodes 81 may themselves be formed as a conductive infrared absorbing layer 12, preferably black-colored.

In another embodiment of the invention the pre-amplification circuit may be external to the package containing the pyroelectric infrared detector device, i.e., on an external printed circuit board. Such external electronics allows space for additional gain stages of amplification and electrical bandwidth control.

## Claims

1. A pyroelectric infrared detector device,
**characterized in that,**
it is comprising an arrangement of a plurality of pyroelectric elements integrated on a pyroelectric substrate and electrically coupled in series each with a same polarization direction.

2. The detector device according to claim 1,
**characterized in that,**
- a pre-amplification circuit is configured to operate the arrangement of the plurality of pyroelectric elements to generate an output voltage.

3. The detector device according to claim 2,
**characterized in that,**
the pre-amplification circuit is configured to operate the arrangement of the plurality of pyroelectric elements in voltage mode.

4. The detector device according to claim 2,
**characterized in that,**
the pre-amplification circuit is configured to operate the arrangement of the plurality of pyroelectric elements in current mode.

5. The detector device according to any of the claims 1 to 4,
**characterized in that,**
the plurality of the pyroelectric elements share a single pyroelectric substrate, wherein particularly the pyroelectric substrate is monocrystalline.

6. The detector device according to claim 5,
**characterized in that,**
the single pyroelectric substrate comprises lithium tantalate.

7. The detector device according to any of the claims claim 5 to 6,
**characterized in that,**
the pyroelectric substrate has an active area where the pyroelectric substrate is thinned, wherein each pyroelectric element has a pair of opposing electrodes arranged on a front side and a back side of the active area.

8. The detector device according to claim 7,
**characterized in that,**
the pyroelectric substrate has a thickness of between 10 -50 um and/or wherein the active area has a thickness of 1-10 um preferably between 1-6 um, more preferably between 1-2 um.

9. The detector device according to claim 7 or 8,
**characterized in that,**
at least one of the front side electrode and/or at least one of the back side electrode are extended to an area of the pyroelectric substrate neighbouring the active area.

10. The detector device according to any of the claims 7 to 9,
**characterized in that,**
the electrodes of the pyroelectric elements cover a circular area on the active area wherein each of the pyroelectric elements is shaped as an annular segment.

11. The detector device according to any of the claims 7 to 9,
**characterized in that,**
the electrodes of the pyroelectric elements cover a rectangular area on the active area wherein each of the pyroelectric elements is shaped as a part of the rectangular area.

12. The detector device according to any of the claims 1 to 11,
**characterized in that,**
the electrical coupling of the pyroelectric elements in series comprises at least one bond wire connecting one of the at least one front side electrodes and contacting one of the at least one back side electrodes and which is fed around an edge of the pyroelectric substrate.

13. The detector device according to any of the claims 1 to 12,
**characterized in that,**
the pyroelectric substrate is attached to a carrier substrate, wherein electronic components of the pre-amplification circuit are attached on one main surface of the carrier substrate, particularly on a surface of the carrier substrate opposite to the surface on/above which the pyroelectric substrate is attached.

14. The detector device according to any of the claims 1 to 12,
**characterized in that,**
the pyroelectric substrate is embedded in a package, wherein electronic components of the pre-amplification circuit are provided on a PCB external to the package and coupled to the arrangement of serially coupled pyroelectric elements.

## Amended claims

### Amended claims in accordance with Rule 137(2) EPC.

1. A pyroelectric infrared detector device (1),
**characterized in that,**
it is comprising an arrangement of a plurality of pyroelectric elements (9) integrated on a pyroelectric substrate (6) and electrically coupled in series each with a same polarization direction.

2. The detector device (1) according to claim 1,
**characterized in that,**
- a pre-amplification circuit is configured to operate the arrangement of the plurality of pyroelectric elements (9) to generate an output voltage (VP).

3. The detector device (1) according to claim 2,
**characterized in that,**
the pre-amplification circuit is configured to operate the arrangement of the plurality of pyroelectric elements (9) in voltage mode.

4. The detector device (1) according to claim 2,
**characterized in that,**
the pre-amplification circuit is configured to operate the arrangement of the plurality of pyroelectric elements (9) in current mode.

5. The detector device (1) according to any of the claims 1 to 4,
**characterized in that,**
the plurality of the pyroelectric elements (9) share a single pyroelectric substrate (6), wherein particularly the pyroelectric substrate (6) is monocrystalline.

6. The detector device (1) according to claim 5,
**characterized in that,**
the single pyroelectric substrate (6) comprises lithium tantalate.

7. The detector device (1) according to any of the claims claim 5 to 6,
**characterized in that,**
the pyroelectric substrate (6) has an active area (7) where the pyroelectric substrate (6) is thinned, wherein each pyroelectric element (9) has a pair of opposing electrodes (81, 82) arranged on a front side and a back side of the active area (7).

8. The detector device (1) according to claim 7,
**characterized in that,**
the pyroelectric substrate (6) has a thickness of between 10 -50 µm and/or wherein the active area (7) has a thickness of 1-10 µm preferably between 1-6 µm, more preferably between 1-2 µm.

9. The detector device (1) according to claim 7 or 8,
**characterized in that,**
at least one of the front side electrode (81) and/or at least one of the back side electrode (82) are extended to an area of the pyroelectric substrate (6) neighbouring the active area (7).

10. The detector device (1) according to any of the claims 7 to 9,
**characterized in that,**
the electrodes (81, 82) of the pyroelectric elements (9) cover a circular area on the active area (7) wherein each of the pyroelectric elements (9) is shaped as an annular segment.

11. The detector device (1) according to any of the claims 7 to 9,
**characterized in that,**
the electrodes (81, 82) of the pyroelectric elements (9) cover a rectangular area on the active area (7), wherein each of the pyroelectric elements (9) is shaped as a part of the rectangular area.

12. The detector device (1) according to any of the claims 1 to 11,
**characterized in that,**
the electrical coupling of the pyroelectric elements (9) in series comprises at least one bond wire (10) connecting one of the at least one front side electrodes (81) and contacting one of the at least one back side electrodes (82) and which is fed around an edge of the pyroelectric substrate (6).

13. The detector device (1) according to any of the claims 1 to 12,
**characterized in that,**
the pyroelectric substrate (6) is attached to a carrier substrate (3), wherein electronic components (11) of the pre-amplification circuit are attached on one main surface of the carrier substrate (3), particularly on a surface of the carrier substrate (3) opposite to the surface on/above which the pyroelectric substrate (6) is attached.

14. The detector device (1) according to any of the claims 1 to 12,
**characterized in that,**
the pyroelectric substrate (6) is embedded in a package (2), wherein electronic components (11) of the pre-amplification circuit are provided on a PCB external to the package (2) and coupled to the arrangement of serially coupled pyroelectric elements (9).
